# EUROPÄISCHE PATENTSCHRIFT

(11) **EP 3 793 838 B1**
(45) Veröffentlichungstag und Bekanntmachung des Hinweises auf die Patenterteilung: **31.08.2022**
(21) Anmeldenummer: 19726573.9
(22) Anmeldetag: 16.05.2019
(51) Int. Cl.: B42D 25/324, B42D 25/373, B42D 25/36, B42D 25/29, B42D 25/425, B42D 25/445, G02B 5/09

(54) **SICHERHEITSELEMENT MIT BEREICHSWEISE METALLISIERTEM FLÄCHENBEREICH, HERSTELLUNGSVERFAHREN UND PRÄGEWERKZEUG**
SECURITY ELEMENT HAVING A SURFACE REGION THAT IS METALLISED IN REGIONS, PRODUCTION METHOD AND STAMPING TOOL
DOCUMENT DE SÉCURITÉ PRÉSENTANT UNE ZONE DE SURFACE MÉTALLISÉE PAR ENDROITS, PROCÉDÉ DE FABRICATION ET OUTIL DE GAUFRAGE

(30) Priorität: 18.05.2018 DE 102018004089
(43) Veröffentlichungstag der Anmeldung: 24.03.2021
(73) Patentinhaber: Giesecke+Devrient Currency Technology GmbH, 81677 München (DE)
(72) Erfinder: FUHSE, Christian, 83624 Otterfing (DE)
(74) Vertreter: Giesecke + Devrient IP
(86) Internationale Anmeldenummer: PCT/EP2019/000148
(87) Internationale Veröffentlichungsnummer: WO 2019/219238

(56) Entgegenhaltungen:
- EP-A1- 3 059 093
- WO-A1-99/13157
- WO-A1-2006/013215
- WO-A2-2014/060089
- US-A1- 2017 129 272

## Beschreibung

Die Erfindung betrifft ein Sicherheitselement zur Absicherung von Wertgegenständen, mit einem Träger mit einem bereichsweise mit einer Reflexionsbeschichtung versehenen Flächenbereich, dessen flächige Ausdehnung eine x-y-Ebene und eine darauf senkrecht stehende z-Achse definiert, und der aus einem Reliefbereich aus einer Vielzahl von Prägeelementen, deren Größe durch eine laterale Abmessung in der x-y-Ebene und eine vertikale Abmessung in z-Richtung gegeben ist, sowie aus einem außerhalb des Reliefbereichs liegenden Außenbereich besteht. Die Erfindung betrifft auch ein Verfahren zum Herstellen eines derartigen Sicherheitselements sowie ein Prägewerkzeug für die Herstellung eines solchen Sicherheitselements.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form metallisierter Folien in eine Banknote eingebettet werden oder über einem opaken Bereich, einem Fensterbereich oder einer durchgehenden Öffnung des Datenträgers angeordnet sein.

Ein Sicherheitselement mit einem Träger, der einen Flächenbereich aufweist, der in eine Vielzahl von Pixeln aufgeteilt ist, die jeweils zumindest eine optisch wirksame Facette umfassen, ist in der Druckschrift EP 3 059 093 beschrieben. Die Facetten sind so orientiert, dass für einen Betrachter der Flächenbereich als gegenüber seiner tatsächlichen Raumform vor- und/ oder zurückspringende Fläche wahrnehmbar ist. Auf den Facetten ist zudem zumindest bereichsweise eine farbkippende Beschichtung ausgebildet.

Die Druckschrift US 2017/129272 befasst sich mit einem optischen Produkt, das eine Oberfläche umfasst, die bei Beleuchtung konfiguriert ist, um durch reflektiertes oder durchgelassenen Licht ein erstes von zwei 3D-Bildern in einem ersten Betrachtungswinkel zu reproduzieren, ohne das zweite 3D-Bild zu reproduzieren, und das zweite 3D-Bild in einem zweiten Betrachtungswinkel zu reproduzieren, ohne das erste 3D-Bild zu reproduzieren.

Die Druckschrift WO 2014/060089 beschreibt ein optisch variables Flächenmuster mit einem Träger, der einen ersten und einen zweiten Flächenbereich aufweist. Die beiden Flächenbereiche sind so ausgebildet, dass der erste Flächenbereich in einem ersten Raumwinkelbereich eine gewölbt erscheinende erste Ansicht und der zweite Flächenbereich in einem zweiten, unterschiedlichen Raumwinkelbereich eine gewölbt erscheinende zweite Ansicht darbietet.

Aus der Druckschrift WO 2006/013215 ist ferner eine diffraktive Vorrichtung und ein Verfahren zum Erzeugen eines dreidimensionalen, vorzugsweise achromatischen Bildes bekannt, das insbesondere eine reale oder eine imaginäre Reliefszene nachstellt.

Die metallisierten Folien enthalten neben metallisierten Teilbereichen auch demetallisierte Teilbereiche, die der Darstellung eines gewünschten Motivs und/oder einer zusätzlichen Echtheitsabsicherung des Datenträgers dienen. Die teilweise metallisierten Flächenbereiche können beispielsweise durch Aufdampfen einer vollflächigem Metallschicht, Aufdrucken eines Ätzresists und nachfolgendem Ätzen der unbeschichteten Bereiche der Metallschicht erzeugt werden. Auch eine bereichsweise Demetallisierung der aufgebrachten Metallschicht mittels Laserbeaufschlagung kommt in Betracht.

Im vorliegenden Zusammenhang ist allerdings ein weiteres Demetallisierungsverfahren von besonderem Interesse, bei dem im Produktionsmaßstab metallfreie Bereiche mit Hilfe eines Waschverfahrens erzeugt werden, wie es grundsätzlich beispielsweise in der Druckschrift WO 99/13157 beschrieben ist. Dabei wird eine Trägerfolie unter Verwendung einer Druckfarbe mit hohem Pigmentanteil mit einem gewünschten Muster bedruckt. Aufgrund des hohen Pigmentanteils bildet die Druckfarbe nach dem Trocknen einen porigen, erhabenen Farbauftrag. Auf der bedruckten Trägerfolie wird dann eine dünne metallische Abdeckschicht gebildet, die im Bereich des Farbauftrags den Farbkörper wegen seiner großen Oberfläche und der porösen Struktur nur teilweise abdeckt. Der Farbauftrag und die darüber liegende metallische Abdeckschicht können dann durch Auswaschen mit einem geeigneten Lösungsmittel entfernt werden, so dass in der Abdeckschicht in den ursprünglich bedruckten Bereichen der Trägerfolie Aussparungen erzeugt werden. Als Lösungsmittel kann bei wasserbasierten Waschfarben insbesondere Wasser verwendet werden. Die Entfernung der Waschfarbe und der Abdeckschicht kann mechanisch, beispielsweise durch Bürsten unterstützt werden.

Bei einem Reliefbereich aus einer Vielzahl kleiner Mikrospiegel wird die Mikrospiegelstruktur aufgrund der unvermeidlichen Passerschwankungen beim Waschfarbdruck in der Regel etwas in den zu demetallisierenden Bereich fortgesetzt. Beispielsweise wird bei einer Registergenauigkeit von +/-0,3 mm die Mikrospiegelstruktur typischerweise 0,3 mm über die Sollgrenze zwischen metallisiertem und demetallisiertem Bereich fortgesetzt, so dass auch in diesem Bereich Mikrospiegelstrukturen demetallisiert werden müssen.

Hier hat der gegenwärtige Erfinder festgestellt, dass das Waschen von Mikrospiegelstrukturen bei zunehmender Spiegelgröße wegen der damit verbundenen zunehmenden Prägetiefe oft problematisch ist. Es kann dann vorkommen, dass die aufgedruckte Waschfarbe die Spiegelstrukturen nicht vollständig benetzt oder dass die Waschfarbe zwischen den Mikrospiegelstrukturen nicht sauber entfernt wird. Im erstgenannten Fall kann die Metallisierung auch in den als metallfrei geplanten Bereichen in den Lücken der Waschfarbe bis zu den Mikrospiegeln durchgreifen und metallisierte Fehlstellen erzeugen, die beim Waschen nicht entfernt werden. Durch diese Probleme beim Waschverfahren verbleiben in den oben genannten Randgebieten mit fortgesetzten Mikrospiegelstrukturen oft Metall- und/oder Waschfarbenreste, die zu einem unschönen Erscheinungsbild führen. Die demetallisierten Flächen erscheinen nicht wie gewünscht transparent, sondern mit einem teilweise deutlich auffallenden Grauschleier.

Davon ausgehend liegt der Erfindung die Aufgabe zugrunde, die Nachteile des Standes der Technik zu vermeiden und insbesondere ein gattungsgemäßes Sicherheitselement bereitzustellen, das bei der Reflexionsbeschichtung bzw. der bereichsweisen Entfernung der Reflexionsbeschichtung sowohl eine brillante Reliefdarstellung als auch eine zuverlässige Entfernung der Reflexionsbeschichtung in den gewünschten Bereichen ermöglicht. Die Erfindung soll auch ein zugehöriges Herstellungsverfahren angeben.

Diese Aufgabe wird durch die Merkmale der unabhängigen Ansprüche gelöst. Weiterbildungen der Erfindung sind Gegenstand der abhängigen Ansprüche.

Ein erfindungsgemäßes Sicherheitselement ist in Anspruch 1 definiert.

Der Erfinder hat erkannt, dass die oben geschilderten Waschprobleme mit der Größe der Prägeelemente, beispielsweise der Mikrospiegel oder rinnen- oder rippenförmiger reflektierender oder rückstreuender Mikrostrukturelemente, zusammenhängen: Je größer die Prägeelemente, desto schwieriger ist eine zuverlässige Demetallisierung. Allerdings hängt die Brillanz einer Mikrospiegeldarstellung ebenfalls wesentlich von der Größe der Spiegelstrukturen ab und ist bei großen Strukturen höher: Je kleiner die Mikrospiegel, desto stärker machen sich Beugungseffekte bemerkbar und die Spiegel reflektieren einfallendes paralleles Licht nicht mehr in eine scharfe Richtung, sondern in einen mit sinkender Spiegelgröße immer größer werdenden Winkelbereich.

Für eine grobe Abschätzung kann man die Beugungswirkung eines Mikrospiegels mit Breite L mit der Beugungswirkung eines Spalts gleicher Breite vergleichen (siehe beispielsweise Bergmann, Schäfer, Lehrbuch der Experimentalphysik, Band 3 Optik, pp 360-363, de Guyter, Berlin, New York, 1993). Die Position des ersten Minimums im Beugungsbild eines Spalts kann bei dieser Analogie als Maß für die Aufweitung des von einem kleinen Mikrospiegel reflektierten Lichtstrahls angesehen werden. Dadurch erhält man beispielsweise bei einem Mikrospiegel mit einer Breite von L = 10 µm eine Aufweitung parallelen Lichts von etwa 3°, während ein kleinerer Spiegel mit L = 5 µm bereits zu einer Aufweitung von etwa 6° und ein Spiegel mit L = 2,5 µm zu einer Aufweitung von etwa 12° führt. Je weniger ein reflektierter Lichtstrahl aufgeweitet wird, desto brillanter sind die erzeugten optischen Effekte.

Die vorliegende Erfindung beruht nun auf dem Gedanken, den gegenläufigen Anforderungen einer zuverlässigen Demetallisierung und einer brillanten Mikrospiegeldarstellung nicht durch die Festlegung einer mittleren, beide Anforderungen in gewissem Maß erfüllenden Spiegelgröße Rechnung zu tragen, sondern durch eine Aufspaltung des Reliefbereichs in zwei Teilbereiche mit unterschiedlicher Spiegelgröße, welche unabhängig voneinander optimal auf die jeweiligen Anforderungen abgestimmt werden können.

Konkret wird der Reliefbereich mit einem Innenbereich und einem diesen umgebenden Randbereich ausgebildet, wobei der Innenbereich denjenigen Teil des Flächenbereichs darstellt, der bei dem fertigen Sicherheitselement metallisch gewünscht ist, und der Randbereich dem Auffangen der beim Aufdrucken der Waschfarbe unvermeidlichen Passerschwankungen dient, so dass beim Aufdrucken der Waschfarbe der Innenbereich vollständig und der Randbereich teilweise vom Waschfarbdruck ausgespart bleibt. Die Prägeelemente, beispielsweise die Mikrospiegel, werden dabei im Innenbereich und im Randbereich mit unterschiedlichen lateralen Abmessungen ausgebildet, nämlich im Randbereich mit mittleren lateralen Abmessungen, die weniger als 90% der mittleren lateralen Abmessung der Prägeelemente im Innenbereich betragen.

Durch die großen lateralen Abmessungen der Prägeelemente im Innenbereich wird sichergestellt, dass der Innenbereich eine hohe Leuchtkraft, eine geringe Aufweitung des einfallenden Lichts und damit ein brillantes Erscheinungsbild aufweist. Die großen lateralen Abmessungen des Innenbereichs können nicht zu Schwierigkeiten bei der Demetallisierung bzw. allgemein der Entfernung der Reflexionsbeschichtung führen, da der Randbereich sicherstellt, dass im Innenbereich unabhängig von Passerschwankungen keine Waschfarbe aufgebracht wird. Andererseits wird durch die kleinen lateralen Abmessungen der Prägeelemente im Randbereich sowohl sichergestellt, dass die Prägeelemente vollständig von Waschfarbe benetzt werden, so dass keine Durchmetallisierungen auftreten, als auch, dass die Waschfarbe beim Waschschritt vollständig entfernt werden kann. Der demetallisierte Teil des Randbereichs weist daher eine ausgezeichnete Transparenz auf und ist frei von störenden Grauschleiern.

Die laterale Abmessung der Prägeelemente ist jeweils durch die Grundfläche der Prägeelemente in der x-y-Ebene gegeben, die beispielsweise durch Projektion des Prägeelements in die x-y-Ebene erhalten werden kann. Die laterale Abmessung entspricht bei einer im Wesentlichen quadratischen Grundfläche beispielsweise der Seitenlänge des Grundflächenquadrats, bei einer im Wesentlichen kreisförmigen Grundfläche dem Kreisdurchmesser. Sind die Prägeelemente als durch gegen die x-y-Achse geneigte Mikrospiegel gebildet, wird bei rechteckigen, elliptischen oder länglichen oder unregelmäßigen Gestaltungen der Grundfläche als laterale Abmessung L die Abmessung der Grundfläche verwendet, die in Neigungsrichtung verläuft bzw. die mit der vertikalen Abmessung H durch den Neigungswinkel α über tan(a) = H/L verknüpft ist. Andernfalls wird bei rechteckigen, elliptischen oder länglichen oder unregelmäßigen Gestaltungen als laterale Abmessung die Quadratwurzel der Fläche der Grundfläche verwendet, da diese ein geeignetes Maß für die lineare Ausdehnung der Prägeelemente darstellt. Hat ein Prägeelement beispielsweise eine rechteckige Abmessung von 5 µm x 10 µm, so wird als laterale Abmessung L =√(5 µm x 10 µm) ≈ 7 µm verwendet. Ein elliptisches Prägeelement mit einem Hauptachsendurchmesser von 10 µm und einem Nebenachsendurchmesser von 5 µm hat entsprechend eine laterale Abmessung L = √ 39,27 µm² ≈ 6,3 µm.

Der Begriff "mittlere laterale Abmessung" bezieht sich auf den Mittelwert der lateralen Abmessungen der Prägeelemente im Randbereich oder Innenbereich. Für n Prägeelemente mit lateralen Abmessungen Lk, k=1...n, ist die mittlere laterale Abmessung <L> = 1/n * Sum_{k=1...n} Lk. Haben alle Prägeelemente dieselbe laterale Abmessung L, so ist die mittlere laterale Abmessung <L> ebenfalls gleich L.

Die Erfindung kann auch statt über die mittlere laterale Abmessung der Prägeelemente dadurch definiert werden, dass gefordert wird, dass die mittlere vertikale Abmessung der Prägeelemente im Randbereich weniger als 90% der mittleren vertikalen Abmessung der Prägeelemente im Innenbereich beträgt.

In einer bevorzugten Ausgestaltung ist vorgesehen, dass die mittlere laterale Abmessung der Prägeelemente im Randbereich weniger als 80%, vorteilhaft weniger als 60% %, besonders bevorzugt weniger als 50% der mittleren lateralen Abmessung der Prägeelemente im Innenbereich beträgt.

Mit besonderem Vorteil beträgt die mittlere vertikale Abmessung der Prägeelemente im Randbereich weniger als 80%, vorteilhaft weniger als 60%, besonders bevorzugt weniger als 50% der mittleren vertikalen Abmessung der Prägeelemente im Innenbereich.

In einer bevorzugten Ausgestaltung sind die Prägeelemente im Randbereich und/ oder im Innenbereich in einem regelmäßigen Raster angeordnet und weisen jeweils alle die gleiche laterale Abmessung auf. Mit Vorteil kann alternativ oder zusätzlich vorgesehen sein, dass die Prägeelemente im Randbereich und/ oder Innenbereich aperiodisch angeordnet sind und unterschiedliche laterale Abmessungen aufweisen. Gegenwärtig besonders bevorzugt ist dabei eine Ausgestaltung, bei der die Prägeelemente im Innenbereich in einem regelmäßigen Raster und die Prägeelemente im Randbereich aperiodisch angeordnet sind.

Mit Vorteil weist der außerhalb des Reliefbereichs liegende Außenbereich keine Prägeelemente auf.

Die Erfindung ist besonders gut für Prägeelemente geeignet, die durch gegen die x-y-Ebene geneigte Mikrospiegel gebildet sind. Besonders in diesem Fall kann die Erfindung auch statt über die mittlere laterale Abmessung der Prägeelemente bzw. Mikrospiegel dadurch definiert werden, dass gefordert wird, dass die vertikale Abmessung der Mikrospiegel im Randbereich weniger als 90%, vorzugsweise weniger als 80%, insbesondere weniger als 60% besonders bevorzugt weniger als 50% der vertikalen Abmessung der Mikrospiegel gleichen Neigungswinkels im Innenbereich beträgt.

Die Prägeelemente im Innenbereich weisen mit Vorteil eine maximale vertikale Abmessung von weniger als 20 µm, bevorzugt von weniger als 10 µm, besonders bevorzugt von weniger als 5 µm auf.

Der Randbereich weist vorteilhaft eine Breite zwischen 0,1 mm und 1 mm, bevorzugt zwischen 0,25 mm und 0,5 mm auf. Die Breite entspricht mit besonderem Vorteil im Wesentlichen der Größe der Passerschwankungen bei einem Waschfarbdruck.

In einer vorteilhaften Ausgestaltung ist die Reflexionsbeschichtung des bereichsweise mit einer Reflexionsbeschichtung versehenen Flächenbereichs eine Metallisierung, insbesondere aus Aluminium, Silber, Kupfer, Gold oder einer Metalllegierung. Alternativ kann die Reflexionsbeschichtung auch eine hochbrechende Schicht, insbesondere eine ZnS-Schicht oder ein TiO₂-Schicht, oder eine farbkippende Beschichtung, insbesondere eine Mehrlagenschicht mit Reflektor, Abstandsschicht und Absorber, sein.

Die Erfindung enthält auch ein in Anspruch 11 definiertes Verfahren zum Herstellen eines Sicherheitselements .

Mit Vorteil wird der Reliefbereich dabei mit einem Randbereich einer Breite ausgebildet, die im Wesentlichen der Größe der Passerschwankungen beim Waschfarbdruck entspricht. Für die vorteilhaften genaueren Ausgestaltungen des Innen- und Randbereichs, des Außenbereichs und der Prägeelemente gelten die obigen Ausführungen.

Die Erfindung enthält schließlich auch ein in Anspruch 13 definiertes Prägewerkzeug für die Herstellung eines Sicherheitselements .

Mit besonderem Vorteil ist dabei vorgesehen, dass die mittlere laterale Abmessung der Prägeelemente im Randbereich weniger als 80%, vorteilhaft weniger als 60% %, besonders bevorzugt weniger als 50% der mittleren lateralen Abmessung der Prägeelemente im Innenbereich beträgt, und/oder dass die mittlere vertikale Abmessung der Prägeelemente im Randbereich weniger als 80%, vorteilhaft weniger als 60%, besonders bevorzugt weniger als 50% der mittleren vertikalen Abmessung der Prägeelemente im Innenbereich beträgt.

Die Prägeelemente im Innenbereich des Prägewerkzeugs sind mit Vorteil in einem regelmäßigen Raster angeordnet und weisen jeweils alle die gleiche laterale Abmessung auf. Die Prägeelemente im Randbereich sind vorteilhaft entweder in einem regelmäßigen Raster angeordnet und weisen jeweils alle die gleiche laterale Abmessung auf, oder sie sind aperiodisch angeordnet und weisen unterschiedliche laterale Abmessungen auf.

Bei dem Prägewerkzeug sind die Prägeelemente bevorzugt durch gegen die x-y-Ebene geneigte Mikrospiegel-Prägeelemente gebildet. Die Prägeelemente, insbesondere Mikrospiegel-Prägeelemente, weisen im Innenbereich zweckmäßig eine maximale vertikale Abmessung von weniger als 20 µm, bevorzugt von weniger als 10 µm, besonders bevorzugt von weniger als 5 µm auf.

Der Randbereich des Werkzeug-Reliefbereichs weist vorteilhaft eine Breite zwischen 0,1 mm und 1 mm, besonders bevorzugt zwischen 0,25 mm und 0,5 mm auf.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement in Form eines aufgeklebten Folienpatches,
- Fig. 2: einen Zwischenschritt bei der Herstellung eines erfindungsgemäßen Sicherheitselements, wobei (a) eine Aufsicht auf das Sicherheitselement und (b) einen Querschnitt entlang der Linie B-B von (a) zeigt,
- Fig. 3: in (a) und (b) eine Darstellung wie in Fig. 2 für einen weiteren Zwischenschritt der Herstellung, nämlich nach dem Waschfarbdruck,
- Fig. 4: eine Darstellung wie in Fig. 2(b) für einen weiteren Zwischenschritt der Herstellung, nämlich nach dem Metallisierungsschritt,
- Fig. 5: in (a) und (b) eine Darstellung wie in Fig. 2 für einen weiteren Zwischenschritt der Herstellung, nämlich nach dem Waschschritt, und in (c) einen Detailausschnitt von (b), und
- Fig. 6: eine Darstellung wie in Fig. 2(b) für ein Sicherheitselement nach einem weiteren Ausführungsbeispiel der Erfindung.

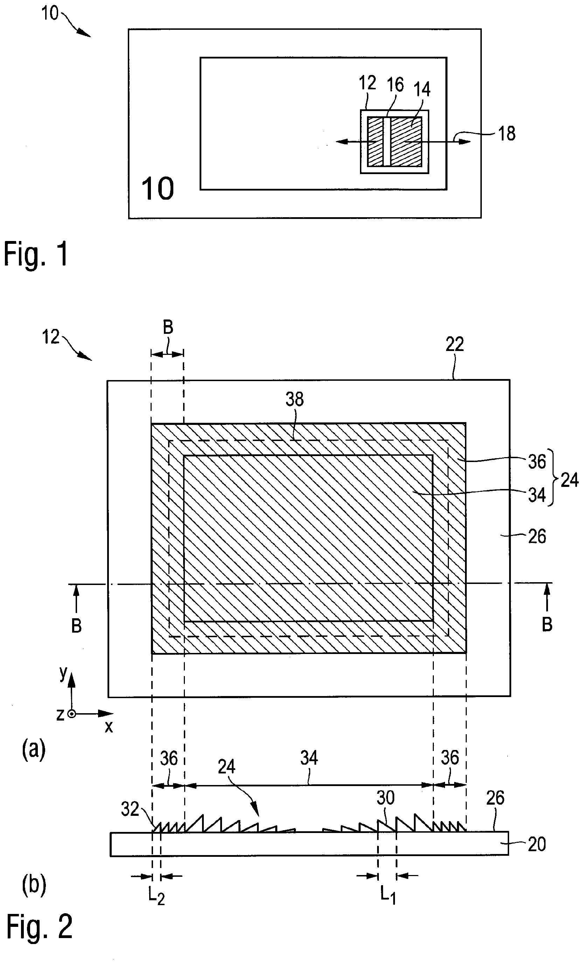

Die Erfindung wird nun am Beispiel von Sicherheitselementen für Banknoten erläutert. Figur 1 zeigt dazu eine schematische Darstellung einer Banknote 10 mit einem erfindungsgemäßen Sicherheitselement 12 in Form eines aufgeklebten Folienpatches. Das Sicherheitselement 12 enthält einen metallisch glänzenden Flächenbereich 14, in dessen Inneren ein heller Balken 16 sichtbar ist, der beim Kippen der Banknote 10 in Längsrichtung nach links bzw. rechts zu wandern scheint (Pfeile 18) und einen sogenannten Rolling-Bar-Effekt zeigt.

Dieser Rolling-Bar-Effekt wird im Ausführungsbeispiel durch eine an sich bekannte Anordnung metallisierter Mikrospiegel im Flächenbereich 14 erzeugt, wobei der Flächenbereich jedoch als Besonderheit Bereiche unterschiedlicher Mikrospiegelgröße aufweist, durch die sowohl eine brillante Mikrospiegeldarstellung erreicht wird als auch eine zuverlässige Demetallisierung der gewünschten Bereiche sichergestellt wird.

Der Aufbau erfindungsgemäßer Sicherheitselemente und die erfindungsgemäße Herstellung werden nun anhand der Figuren 2 bis 5 näher erläutert, in denen verschiedene Zwischenschritte bei der Herstellung des Sicherheitselements 12 dargestellt sind.

Zunächst zeigt Fig. 2 die Situation nach dem Aufbringen einer Prägelackschicht auf einen Folienträger und dem Abformen der gewünschten Reliefstruktur, wobei Fig. 2(a) eine Aufsicht auf das Sicherheitselement und Fig. 2(b) einen Querschnitt entlang der Linie B-B der Fig. 2(a) zeigt. Das Sicherheitselement 12 enthält einen Folienträger 20, dessen Oberfläche einen Flächenbereich 22 bereitstellt. Die Ausdehnung des Flächenbereichs 22 definiert eine x-y-Ebene auf der Trägeroberfläche und eine darauf senkrecht stehende z-Achse. Der Flächenbereich 22 besteht aus einem Reliefbereich 24 (weite Schraffur in Fig. 2(a)) mit einer Vielzahl von quadratischen, gegen die x-y-Ebene geneigten Mikrospiegeln 30, 32, und einem außerhalb des Reliefbereichs 24 liegenden Außenbereich 26, der im Ausführungsbeispiel strukturlos flach und ohne Mikrospiegel ausgebildet ist (ohne Schraffur in Fig. 2(a)). Die Größe der quadratischen Mikrospiegel 30, 32 wird durch eine laterale Abmessung L in der x-y-Ebene und eine vertikale Abmessung H in z-Richtung beschrieben. Die laterale Abmessung L und die vertikale Abmessung H sind für jeden Mikrospiegel durch den Neigungswinkel a über tan(a) = H/L miteinander verknüpft.

Der lokale Neigungswinkel a der Mikrospiegel und damit die lokale vertikale Abmessung H der Mikrospiegel sind so gewählt, dass die Mikrospiegelanordnung das gewünschte optische Erscheinungsbild, beispielsweise den genannten Rolling-Bar-Effekt erzeugt. In der Praxis werden dabei Neigungswinkel bis zu etwa 30° eingesetzt.

Als Besonderheit enthält der Reliefbereich 24 zwei Bereiche mit unterschiedlicher Mikrospiegelgröße, nämlich einen Innenbereich 34 und einen den Innenbereich umgebenden Randbereich 36, der damit zwischen Innenbereich 34 und Außenbereich 26 des Flächenbereichs 22 liegt.

Der Innenbereich 34 stellt denjenigen Teil des Flächenbereichs 22 dar, der bei dem fertigen Sicherheitselement 12 in jedem Fall metallisiert sein soll. Da die Metallisierung/Demetallisierung des Flächenbereichs 22 vorliegend durch ein Waschverfahren erfolgt, ist zum Auffangen der beim Aufdrucken der Waschfarbe unvermeidlichen Passerschwankungen ein den Innenbereich 34 umgebender Randbereich 36 vorgesehen, dessen Breite B der Größe der Passerschwankungen des Waschfarbdrucks Rechnung trägt. Im Ausführungsbeispiel beträgt die Breite B des Randbereichs 36 etwa B = 0,6 mm, womit Passerschwankungen beim Waschfarbdruck von +/- 0,3 mm Rechnung getragen wird. Der deutlicheren Darstellung halber ist der Randbereich 36 in den Figuren mit übertriebener Größe relativ zum Innenbereich 34 dargestellt.

Die im Innenbereich 34 liegenden Mikrospiegel 30 sind dabei mit einer ersten lateralen Abmessung L₁ ausgebildet, während die im Randbereich 36 liegenden Mikrospiegel 32 mit einer zweiten, deutlich kleineren, lateralen Abmessung L₂ ausgebildet sind. Im Ausführungsbeispiel beträgt die zweite laterale Abmessung L₂ lediglich 50% der ersten lateralen Abmessung Li, wobei die erste laterale Abmessung L₁ konkret beispielsweise L₁ = 10 µm und die zweite laterale Abmessung L₂ = 5 µm beträgt.

Es ist zu betonen, dass die Darstellung der Fig. 2(b) bezüglich der Anzahl der Mikrospiegel stark schematisiert ist. In der Praxis enthalten sowohl der Innenbereich 34 als auch der Randbereich 36 jeweils eine große Anzahl von Mikrospiegeln. Beispielsweise enthält ein Randbereich einer Breite von B = 0,6 mm bei einer lateralen Spiegelabmessung von L₂ = 5 µm etwa 120 nebeneinanderliegende Mikrospiegel 32, und in einem Innenbereich 34 einer Breite von 15 mm liegen bei einer lateralen Spiegelabmessung von L₁ = 10 µm etwa 1500 Mikrospiegel 30 nebeneinander.

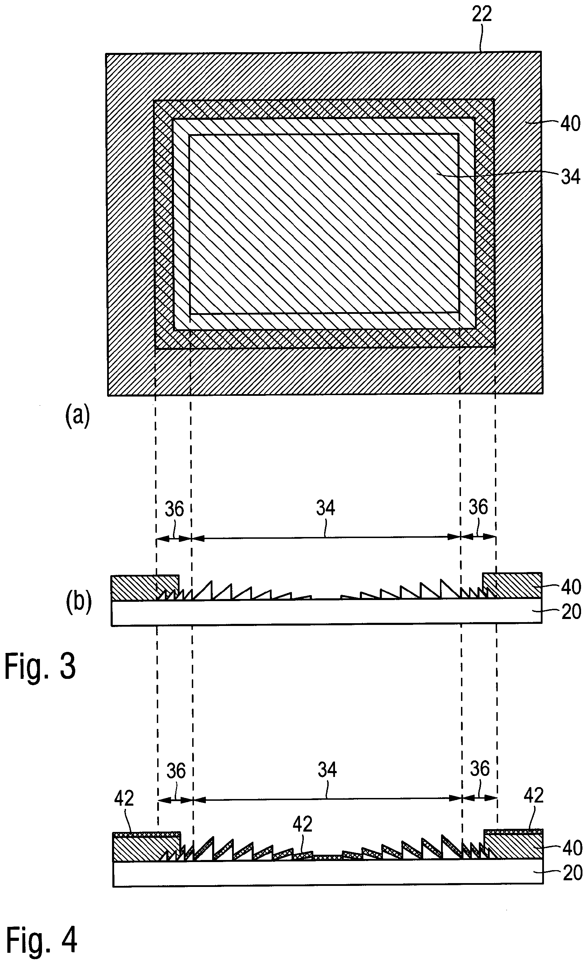

Mit Bezug auf Fig. 3, die in (a) und (b) eine zu Fig. 2 analoge Darstellung zeigt, wird nach der Erzeugung der Mikrospiegelanordnung der Flächenbereich 22 in denjenigen Bereichen, die im fertigen Sicherheitselement 12 metallfrei bleiben sollen, mit einer Waschfarbe 40 bedruckt (engere Schraffur in Fig. 3(a)). Der von der Waschfarbenschicht ausgesparte Bereich des Flächenbereichs ist im fertigen Sicherheitselement metallisiert. Er umfasst daher in jedem Fall den Innenbereich 34 und ist zudem so ausgelegt, dass er ohne Passerschwankungen in der Mitte des Randbereichs 36 (in Fig. 2(a) mit Bezugszeichen 38 gestrichelt eingezeichnet) endet.

In der Praxis wird der ausgesparte Bereich beim Aufdruck der Waschfarbe allerdings in der Regel nicht entlang des Mittenumrisses 38 verlaufen, sondern gegenüber diesem um eine im Rahmen der Passerschwankungen liegenden Versatz verschoben sein. Da die Breite B des Randbereichs gerade auf die Größe der Passerschwankungen abgestimmt ist, ist sichergestellt, dass die Waschfarbenschicht 40 zwar nicht an dem Mittenumriss 38, aber doch stets im Inneren des Randbereichs 36 endet. Der Innenbereich 34 bleibt daher unabhängig von dem konkreten Wert der Passerschwankungen frei von Waschfarbe, wie in Fig. 3 illustriert.

Im nächsten Schritt wird der Flächenbereich 22 vollflächig metallisiert, wie in der Querschnittsdarstellung der Fig. 4 dargestellt, und dabei mit einer Metallisierung 42, beispielsweise einer Aluminiumbeschichtung, versehen. Die Mikrospiegel 30 des Innenbereichs 34 werden dabei vollständig metallisiert, während die Mikrospiegel 32 im Randbereich 36 nur in dem nicht mit Waschfarbe 40 bedeckten Teilbereich metallisiert werden. In dem von der Waschfarbenschicht 40 bedeckten Teil des Randbereichs 36 und im Außenbereich 26 wird die Metallisierung 42 auf die Waschfarbe und nicht direkt auf die Trägeroberfläche bzw. die Mikrospiegel 32 aufgebracht.

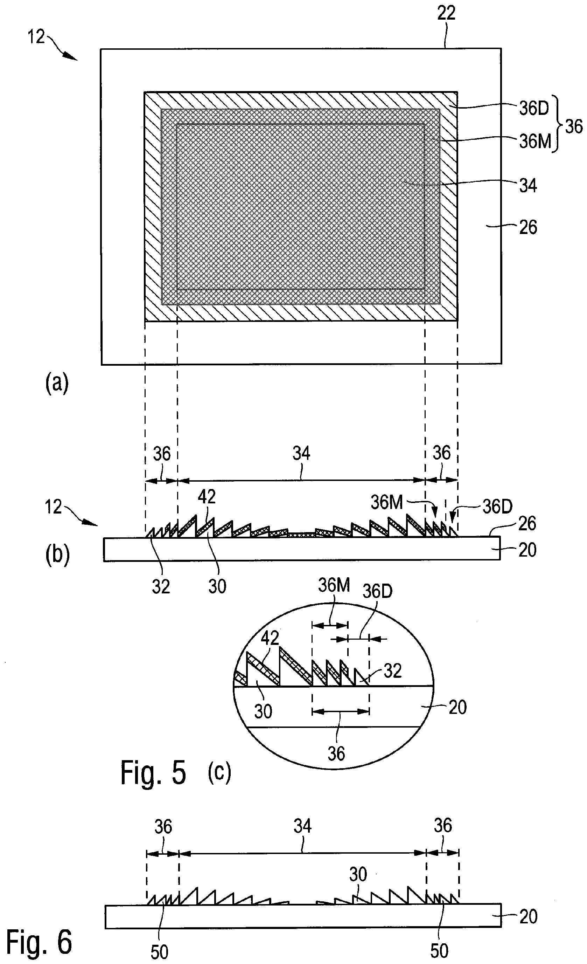

Anschließend wird die Waschfarbe 40 zusammen mit dem auf der Waschfarbe liegenden Teil der Metallisierung 42 ausgewaschen und dadurch der in Fig. 5 dargestellte, bereichsweise metallisierte Flächenbereich 22 erhalten. Die Figur 5 zeigt in (a) und (b) wie in Fig. 2 eine Aufsicht und einen Querschnitt des Sicherheitselements, Fig. 5(c) zeigt einen Ausschnitt am rechten Rand des Randbereichs 36 genauer.

Nach dem Waschschritt sind die Mikrospiegel 32 des Innenbereichs 34 vollständig mit der Metallisierung 42 versehen, während der Außenbereich 26 vollständig demetallisiert ist. Im Randbereich 36 sind die Mikrospiegel 34 teilweise metallisiert (Teilbereich 36M) und teilweise demetallisiert (Teilbereich 36D), wie am besten in Fig. 5(a) und dem Detailausschnitt der Fig. 5(c) zu erkennen. Der genaue Verlauf der Grenze zwischen metallisierten und demetallisierten Mikrospiegeln hängt von den bei dem konkreten Druckvorgang auftretenden Passerschwankungen ab, er liegt wegen der Wahl der Breite B des Randbereichs 36 in jedem Fall innerhalb des Randbereichs 36.

Die unterschiedlichen lateralen Abmessungen Li, L₂ der Mikrospiegel 30, 32 im Innenbereich 34 und Randbereich 36 führen nun zu einem besonders brillanten und klaren Erscheinungsbild des metallisierten Flächenbereichs 22. Durch die großen lateralen Abmessungen L₁ der Mikrospiegel 30 im Innenbereich 34 werden eine hohe Leuchtkraft, eine geringe Aufweitung des einfallenden Lichts und damit ein brillantes Erscheinungsbild sichergestellt. Demetallisierungsprobleme können im Innenbereich 34 nicht auftreten, da der umgebende Randbereich 36 auftretende Passerschwankungen auffängt und daher sichergestellt ist, dass keine Waschfarbe 40 im Innenbereich 34 aufgebracht wird.

Zudem wird durch die kleinen lateralen Abmessungen L₂ der Mikrospiegel 32 im Randbereich 36 sichergestellt, dass die Waschfarbe 40 dort die kleinen Mikrospiegel 32 vollständig benetzt, so dass keine Durchmetallisierungen zu befürchten sind, und dass die Waschfarbe beim Waschschritt auch vollständig entfernt wird. Der demetallisierte Teilbereich 36D des Randbereichs 36 erscheint daher transparent, klar und ohne unerwünschten Grauschleier. Die etwas geringere Helligkeit der kleineren metallisierten Mikrospiegel 34 im Teilbereich 36M fällt durch die geringe Breite des Randbereichs erfahrungsgemäß nicht störend auf.

Die Mikrospiegel 32 des Randbereichs 36 können, wie in den Figuren 2 bis 5 gezeigt, in einem regelmäßigen Raster vorliegen, sie können in anderen Ausgestaltungen aber auch aperiodisch ausgebildet und angeordnet sein. Dies ist in Fig. 6 anhand einer Mikrospiegelanordnung illustriert, deren Mikrospiegel 30 im Innenbereich 34 regelmäßig und mit konstanter lateraler Abmessung L₁ ausgebildet sind, und deren Mikrospiegel 50 im Randbereich 36 aperiodisch und mit unterschiedlichen lateralen Abmessungen L₂ ausgebildet sind. Die oben beschriebenen vorteilhaften Wirkungen treten bei aperiodischen Anordnungen bereits dann ein, wenn die mittlere zweite laterale Abmessungen <L₂> der Mikrospiegel 50 im Randbereich 36 deutlich kleiner als die mittlere erste laterale Abmessung <L₁> der Mikrospiegel 30 im Innenbereich 34 gewählt ist.

Im Ausführungsbeispiel der Fig. 6 ist beispielsweise die erste laterale Abmessung für alle quadratischen Mikrospiegel 30 des Innenbereichs 34 gleich und beträgt L₁ = 10 µm, so dass <L₁> = L₁ = 10 µm ist. Die zweite laterale Abmessung L₂ der quadratischen Mikrospiegel 50 im Randbereich 36 schwankt aperiodisch gleichverteilt zwischen 3 µm und 7 µm, so dass die mittlere zweite laterale Abmessung <L₂> = 5 µm ist, und die mittlere zweite laterale Abmessung lediglich 50% der mittleren ersten lateralen Abmessung beträgt.

Auch in diesem Fall werden durch die großen lateralen Abmessungen L₁ der Mikrospiegel 30 im Innenbereich 34 eine hohe Leuchtkraft, eine geringe Aufweitung des einfallenden Lichts und damit ein brillantes Erscheinungsbild sichergestellt. Durch die kleine mittlere laterale Abmessung <L₂> der Mikrospiegel 50 im Randbereich 36 ist zudem sichergestellt, dass die Waschfarbe 40 dort die Mikrospiegel 50 vollständig benetzt, so dass keine Durchmetallisierungen auftreten, und dass die Waschfarbe beim nachfolgenden Waschschritt auch vollständig entfernt wird. Die etwas geringere Helligkeit der kleineren metallisierten Mikrospiegel 50 im demetallisierten Teil des Randbereichs fällt durch die geringe Breite des Randbereichs erfahrungsgemäß nicht störend auf.

### Bezugszeichenliste

- 10: Banknote
- 12: Sicherheitselement
- 14: Flächenbereich
- 16: heller Balken
- 18: Wanderung des Balkens
- 20: Folienträger
- 22: Flächenbereich
- 24: Reliefbereich
- 26: Außenbereich
- 30, 32: Mikrospiegel
- 34: Innenbereich
- 36: Randbereich
- 36M, 36D: Teilbereiche Randbereich
- 38: Mittenumriss
- 40: Waschfarbe
- 42: Metallisierung
- 50: Mikrospiegel

## Patentansprüche

1. Sicherheitselement (12) zur Absicherung von Wertgegenständen, mit einem Träger (20) mit einem bereichsweise mit einer Reflexionsbeschichtung (42) versehenen Flächenbereich (22), dessen flächige Ausdehnung eine x-y-Ebene und eine darauf senkrecht stehende z-Achse definiert, und der aus einem Reliefbereich (24) aus einer Vielzahl von Prägeelementen (30, 32), deren Größe durch eine laterale Abmessung in der x-y-Ebene und eine vertikale Abmessung in z-Richtung gegeben ist, sowie aus einem außerhalb des Reliefbereichs liegenden Außenbereich (26) besteht, wobei
- der Reliefbereich (24) einen Innenbereich (34) aufweist, in dem die Prägeelemente (30) vollständig reflexionsbeschichtet sind, und einen zwischen Innenbereich (34) und Außenbereich (26) liegenden Randbereich (36) aufweist, in dem ein Teil der Prägeelemente (32) reflexionsbeschichtet ist und der Rest der Prägeelemente (32) unbeschichtet ist,
- der Außenbereich (26) vollständig unbeschichtet ist, und
- die mittlere laterale Abmessung der Prägeelemente im Randbereich (36) weniger als 90% der mittleren lateralen Abmessung der Prägeelemente im Innenbereich (34) beträgt und/ oder die mittlere vertikale Abmessung der Prägeelemente im Randbereich (36) weniger als 90% der mittleren vertikalen Abmessung der Prägeelemente im Innenbereich (34) beträgt.

2. Sicherheitselement nach Anspruch 1, **dadurch gekennzeichnet, dass** die mittlere laterale Abmessung der Prägeelemente im Randbereich weniger als 80%, vorteilhaft weniger als 60%, besonders bevorzugt weniger als 50% der mittleren lateralen Abmessung der Prägeelemente im Innenbereich beträgt.

3. Sicherheitselement nach Anspruch 1 oder 2, **dadurch gekennzeichnet, dass** die mittlere vertikale Abmessung der Prägeelemente im Randbereich weniger als 80%, vorteilhaft weniger als 60% besonders bevorzugt weniger als 50% der mittleren vertikalen Abmessung der Prägeelemente im Innenbereich beträgt.

4. Sicherheitselement nach wenigstens einem der Ansprüche 1 bis 3, **dadurch gekennzeichnet, dass** die Prägeelemente im Randbereich und/oder Innenbereich in einem regelmäßigen Raster angeordnet sind und jeweils alle die gleiche laterale Abmessung aufweisen.

5. Sicherheitselement nach wenigstens einem der Ansprüche 1 bis 4, **dadurch gekennzeichnet, dass** der außerhalb des Reliefbereichs liegende Außenbereich keine Prägeelemente aufweist.

6. Sicherheitselement nach wenigstens einem der Ansprüche 1 bis 5, **dadurch gekennzeichnet, dass** die Prägeelemente im Randbereich und/ oder Innenbereich aperiodisch angeordnet sind und unterschiedliche laterale Abmessungen aufweisen.

7. Sicherheitselement nach wenigstens einem der Ansprüche 1 bis 6, **dadurch gekennzeichnet, dass** die Prägeelemente durch gegen die x-y-Ebene geneigte Mikrospiegel gebildet sind, insbesondere, dass die vertikale Abmessung der Mikrospiegel im Randbereich weniger als 90%, vorzugsweise weniger als 80%, insbesondere weniger als 60%, besonders bevorzugt weniger als 50% der vertikalen Abmessung der Mikrospiegel gleichen Neigungswinkels im Innenbereich beträgt.

8. Sicherheitselement nach wenigstens einem der Ansprüche 1 bis 7, **dadurch gekennzeichnet, dass** die Prägeelemente im Innenbereich eine maximale vertikale Abmessung von weniger als 20 µm, bevorzugt von weniger als 10 µm, besonders bevorzugt von weniger als 5 µm aufweisen.

9. Sicherheitselement nach wenigstens einem der Ansprüche 1 bis 8, **dadurch gekennzeichnet, dass** der Randbereich eine Breite zwischen 0,1 mm und 1 mm aufweist.

10. Sicherheitselement nach wenigstens einem der Ansprüche 1 bis 9, **dadurch gekennzeichnet, dass** der bereichsweise mit einer Reflexionsbeschichtung versehene Flächenbereich als Reflexionsbeschichtung mit einer Metallisierung, insbesondere aus Aluminium, Silber, Kupfer, Gold oder einer Metalllegierung versehen ist, oder **dass** der bereichsweise mit einer Reflexionsbeschichtung versehenen Flächenbereich als Reflexionsbeschichtung mit einer hochbrechenden Schicht, insbesondere einer ZnS-Schicht oder eine TiO₂₋Schicht, oder einer farbkippenden Beschichtung, insbesondere einer Mehrlagenschicht mit Reflektor, Abstandsschicht und Absorber, versehen ist.

11. Verfahren zum Herstellen eines Sicherheitselements (12) nach einem der Ansprüche 1 bis 10, bei dem ein Träger (20) mit einem bereichsweise mit einer Reflexionsbeschichtung (42) versehenen Flächenbereich (22) ausgestattet wird, indem
- der Träger (20) in dem gewünschten Flächenbereich (22) mit einer Prägelackschicht versehen wird,
- in die Prägelackschicht in einem Reliefbereich (24) eine Vielzahl von Prägeelementen (30, 32) abgeformt wird, deren Größe durch eine laterale Abmessung in der x-y-Ebene und eine vertikale Abmessung in z-Richtung gegeben ist, und wobei ein außerhalb des Reliefbereichs liegender Außenbereich (26) des Flächenbereichs verbleibt,
- im Waschfarbdruck der Außenbereich (26) vollständig und die Prägeelemente bereichsweise mit Waschfarbe bedruckt werden, wobei der im fertigen Sicherheitselement reflexionsbeschichtet gewünschte Bereich vom Waschfarbdruck ausgespart wird,
- der bereichsweise mit Waschfarbe versehene Flächenbereich (22) mit der Reflexionsbeschichtung (42) versehen wird, und
- die Waschfarbe mit der darauf befindlichen Reflexionsbeschichtung (42) entfernt wird, wobei
- der Reliefbereich mit einem Innenbereich (34) und einem Randbereich (36) ausgebildet wird, wobei der Innenbereich denjenigen Teil des Flächenbereichs darstellt, der bei dem fertigen Sicherheitselement reflexionsbeschichtet gewünscht ist und der den Innenbereich umgebende Randbereich dem Auffangen der beim Aufdrucken der Waschfarbe unvermeidlichen Passerschwankungen dient, so dass beim Aufdrucken der Waschfarbe der Innenbereich vollständig und der Randbereich teilweise vom Waschfarbdruck ausgespart bleibt, und
- die Prägeelemente (30, 32) im Innenbereich (34) und Randbereich (36) mit unterschiedlichen lateralen Abmessungen ausgebildet werden, nämlich im Randbereich mit einer mittleren lateralen Abmessung, die weniger als 90% der mittleren lateralen Abmessung der Prägeelemente im Innenbereich beträgt, und/oder die Prägeelemente im Innenbereich (34) und Randbereich (36) mit unterschiedlichen vertikalen Abmessungen ausgebildet werden, nämlich im Randbereich mit einer mittleren vertikalen Abmessung, die weniger als 90% der mittleren vertikalen Abmessung der Prägeelemente im Innenbereich beträgt.

12. Verfahren nach Anspruch 11, **dadurch gekennzeichnet, dass** der Reliefbereich mit einem Randbereich einer Breite ausgebildet wird, die im Wesentlichen der Größe der Passerschwankungen beim Waschfarbdruck entspricht.

13. Prägewerkzeug für die Herstellung eines Sicherheitselements (12) nach einem der Ansprüche 1 bis 10, mit einem Werkzeug-Reliefbereich aus einer Vielzahl von Prägeelementen, deren Größe durch eine laterale Abmessung in der x-y-Ebene und eine vertikale Abmessung in z-Richtung gegeben ist, wobei der Werkzeug-Reliefbereich einen Innenbereich und einen den Innenbereich umgebenden Randbereich aufweist, und die mittlere laterale Abmessung der Prägeelemente im Randbereich weniger als 90% der mittleren lateralen Abmessung der Prägeelemente im Innenbereich beträgt und/oder die mittlere vertikale Abmessung der Prägeelemente im Randbereich weniger als 90% der mittleren vertikalen Abmessung der Prägeelemente im Innenbereich beträgt.

14. Prägewerkzeug nach Anspruch 13, **dadurch gekennzeichnet, dass** die mittlere laterale Abmessung der Prägeelemente im Randbereich weniger als 80%, vorteilhaft weniger als 60% %, besonders bevorzugt weniger als 50% der mittleren lateralen Abmessung der Prägeelemente im Innenbereich beträgt, und/ oder dass die mittlere vertikale Abmessung der Prägeelemente im Randbereich weniger als 80%, vorteilhaft weniger als 60%, besonders bevorzugt weniger als 50% der mittleren vertikalen Abmessung der Prägeelemente im Innenbereich beträgt.

15. Prägewerkzeug nach Anspruch 13 oder 14, **dadurch gekennzeichnet, dass** die Prägeelemente im Innenbereich in einem regelmäßigen Raster angeordnet sind und jeweils alle die gleiche laterale Abmessung aufweisen und die Prägeelemente im Randbereich entweder in einem regelmäßigen Raster angeordnet sind und jeweils alle die gleiche laterale Abmessung aufweisen, oder aperiodisch angeordnet sind und unterschiedliche laterale Abmessungen aufweisen.

16. Prägewerkzeug nach wenigstens einem der Ansprüche 13 bis 15, **dadurch gekennzeichnet, dass** die Prägeelemente durch gegen die x-y-Ebene geneigte Mikrospiegel-Prägeelemente gebildet sind, wobei vorzugsweise die Prägeelemente im Innenbereich eine maximale vertikale Abmessung von weniger als 20 µm, bevorzugt von weniger als 10 µm, besonders bevorzugt von weniger als 5 µm aufweisen.

## Claims

1. A security element (12) for securing valuable articles, having a carrier (20) having an areal region (22) that is furnished in some regions with a reflective coating (42) and whose areal expanse defines an x-y plane and a z-axis perpendicular thereto, and that consists of a relief region (24) composed of a plurality of embossing elements (30, 32) whose size is given by a lateral dimension in the x-y plane and a vertical dimension in the z-direction, and of an outer region (26) that lies outside the relief region,
- the relief region (24) comprising an inner region (34) in which the embossing elements (30) are completely reflective coated, and comprising an edge region (36) that lies between the inner region (34) and the outer region (26) and in which a portion of the embossing elements (32) are reflective coated and the rest of the embossing elements (32) are uncoated,
- the outer region (26) being completely uncoated, and
- the average lateral dimension of the embossing elements in the edge region (36) being less than 90% of the average lateral dimension of the embossing elements in the inner region (34), and/ or the average vertical dimension of the embossing elements in the edge region (36) being less than 90% of the average vertical dimension of the embossing elements in the inner region (34).

2. The security element according to claim 1, **characterized in that** the average lateral dimension of the embossing elements in the edge region is less than 80%, advantageously less than 60%, particularly preferably less than 50% of the average lateral dimension of the embossing elements in the inner region.

3. The security element according to claim 1 or 2, **characterized in that** the average vertical dimension of the embossing elements in the edge region is less than 80%, advantageously less than 60%, particularly preferably less than 50% of the average vertical dimension of the embossing elements in the inner region.

4. The security element according to at least one of claims 1 to 3, **characterized in that** the embossing elements in the edge region and/or inner region are arranged in a regular grid and, in each case, all have the same lateral dimension.

5. The security element according to at least one of claims 1 to 4, **characterized in that** the outer region that lies outside the relief region comprises no embossing elements.

6. The security element according to at least one of claims 1 to 5, **characterized in that** the embossing elements in the edge region and/or inner region are arranged aperiodically and have different lateral dimensions.

7. The security element according to at least one of claims 1 to 6, **characterized in that** the embossing elements are formed by micromirrors that are inclined against the x-y plane, especially **in that** the vertical dimension of the micromirrors in the edge region is less than 90%, preferably less than 80%, especially less than 60% and particularly preferably less than 50% of the vertical dimension of the micromirrors of the same inclination angle in the inner region.

8. The security element according to at least one of claims 1 to 7, **characterized in that** the embossing elements in the inner region have a maximum vertical dimension of less than 20 µm, preferably of less than 10 µm, particularly preferably of less than 5 µm.

9. The security element according to at least one of claims 1 to 8, **characterized in that** the edge region has a width between 0.1 mm and 1 mm.

10. The security element according to at least one of claims 1 to 9, **characterized in that** the areal region that is furnished in some regions with a reflective coating is furnished with, as the reflective coating, a metalization, especially composed of aluminum, silver, copper, gold or a metal alloy, or **in that** the areal region that is furnished in some regions with a reflective coating is furnished with, as the reflective coating, a high-index coating, especially a ZnS coating or a TiO₂ coating, or a color-shifting coating, especially a multilayer coating having a reflector, a spacing coating and an absorber.

11. A method for manufacturing a security element (12) according to one of claims 1 to 10, in which a carrier (20) is equipped with an areal region (22) that is furnished in some regions with a reflective coating (42) in that
- the carrier (20) is furnished in the desired areal region (22) with an embossing lacquer coating,
- there is molded in the embossing lacquer coating, in a relief region (24), a plurality of embossing elements (30, 32) whose size is given by a lateral dimension in the x-y plane and a vertical dimension in the z-direction, and an outer region (26) of the areal region that lies outside the relief region remaining,
- in washable ink printing, the outer region (26) is fully printed on with washable ink and the embossing elements are printed on in some regions with washable ink, the region that is desired to be reflectively coated in the finished security element being omitted from the washable ink printing,
- the areal region (22) that is furnished in some regions with washable ink is furnished with the reflective coating (42), and
- the washable ink and the reflective coating (42) located on it is removed,
- the relief region being formed having an inner region (34) and an edge region (36), the inner region constituting that part of the areal region that is desired to be reflectively coated in the finished security element, and the edge region that surrounds the inner region serving to absorb the unavoidable register variations when printing the washable ink such that, when printing the washable ink, the inner region remains completely omitted and the edge region partially omitted from the washable ink printing, and
- the embossing elements (30, 32) in the inner region (34) and edge region (36) are formed having different lateral dimensions, namely in the edge region having an average lateral dimension that is less than 90% of the average lateral dimension of the embossing elements in the inner region, and/or the embossing elements in the inner region (34) and edge region (36) being formed having different vertical dimensions, namely in the edge region having an average vertical dimension that is less than 90% of the average vertical dimension of the embossing elements in the inner region.

12. The method according to claim 11, **characterized in that** the relief region is formed having an edge region of a width that corresponds substantially to the size of the register variations in washable ink printing.

13. An embossing die for manufacturing a security element (12) according to one of claims 1 to 10, having a die relief region composed of a plurality of embossing elements whose size is given by a lateral dimension in the x-y plane and a vertical dimension in the z-direction, the die relief region comprising an inner region and an edge region that surrounds the inner region, and the average lateral dimension of the embossing elements in the edge region being less than 90% of the average lateral dimension of the embossing elements in the inner region, and/ or the average vertical dimension of the embossing elements in the edge region being less than 90% of the average vertical dimension of the embossing elements in the inner region.

14. The embossing die according to claim 13, **characterized in that** the average lateral dimension of the embossing elements in the edge region is less than 80%, advantageously less than 60%, particularly preferably less than 50% of the average lateral dimension of the embossing elements in the inner region, and/or **in that** the average vertical dimension of the embossing elements in the edge region is less than 80%, advantageously less than 60%, particularly preferably less than 50% of the average vertical dimension of the embossing elements in the inner region.

15. The embossing die according to claim 13 or 14, **characterized in that** the embossing elements in the inner region are arranged in a regular grid and, in each case, all have the same lateral dimension and the embossing elements in the edge region are arranged either in a regular grid and, in each case, all have the same lateral dimension, or are arranged aperiodically and have different lateral dimensions.

16. The embossing die according to at least one of claims 13 to 15, **characterized in that** the embossing elements are formed by micromirror embossing elements that are inclined against the x-y-plane, the embossing elements in the inner region preferably having a maximum vertical dimension of less than 20 µm, preferably of less than 10 µm, particularly preferably of less than 5 µm.

## Revendications

1. Élément de sécurité (12) destiné à protéger des objets de valeur, comprenant un support (20) avec une zone de surface (22) partiellement pourvue d'un revêtement réfléchissant (42), dont l'étendue surfacique définit un plan x-y et un axe z s'étendant verticalement sur celle-ci, et laquelle est composée d'une zone en relief (24) constituée d'une pluralité d'éléments de gaufrage (30, 32), dont la taille est déterminée par une dimension latérale dans le plan x-y et par une dimension verticale dans la direction z, ainsi que d'une zone extérieure (26) située à l'extérieur de la zone en relief,
dans lequel
- la zone en relief (24) présente une zone intérieure (34) dans laquelle les éléments de gaufrage (30) sont entièrement pourvus d'un revêtement réfléchissant, et présente une zone de bord (36) située entre la zone intérieure (34) et la zone extérieure (26), dans laquelle une partie des éléments de gaufrage (32) est pourvue d'un revêtement réfléchissant et le reste des éléments de gaufrage (32) est dépourvu de revêtement,
- la zone extérieure (26) est entièrement dépourvue de revêtement, et
- la dimension latérale moyenne des éléments de gaufrage dans la zone de bord (36) mesure moins de 90 % de la dimension latérale moyenne des éléments de gaufrage dans la zone intérieure (34) et/ ou la dimension verticale moyenne des éléments de gaufrage dans la zone de bord (36) mesure moins de 90 % de la dimension verticale moyenne des éléments de gaufrage dans la zone intérieure (34).

2. Élément de sécurité selon la revendication 1, **caractérisé en ce que** la dimension latérale moyenne des éléments de gaufrage dans la zone de bord mesure moins de 80 %, avantageusement moins de 60 %, de façon particulièrement avantageuse moins de 50 % de la dimension latérale moyenne des éléments de gaufrage dans la zone intérieure.

3. Élément de sécurité selon la revendication 1 ou 2, **caractérisé en ce que** la dimension verticale moyenne des éléments de gaufrage dans la zone de bord mesure moins de 80 %, avantageusement moins de 60 %, de façon particulièrement avantageuse moins de 50 % de la dimension verticale moyenne des éléments de gaufrage dans la zone intérieure.

4. Élément de sécurité selon l'une au moins des revendications 1 à 3, **caractérisé en ce que** les éléments de gaufrage dans la zone de bord et/ ou dans la zone intérieure sont agencés dans une grille régulière et présentent respectivement tous la même dimension latérale.

5. Élément de sécurité selon l'une au moins des revendications 1 à 4, **caractérisé en ce que** la zone extérieure située à l'extérieur de la zone en relief ne présente pas d'éléments de gaufrage.

6. Élément de sécurité selon l'une au moins des revendications 1 à 5, **caractérisé en ce que** les éléments de gaufrage dans la zone de bord et/ ou dans la zone intérieure sont disposés de façon apériodique et présentent des dimensions latérales différentes.

7. Élément de sécurité selon l'une au moins des revendications 1 à 6, **caractérisé en ce que** les éléments de gaufrage sont constitués de micromiroirs inclinés par rapport au plan x-y, en particulier **en ce que** la dimension verticale des micromiroirs dans la zone de bord mesure moins de 90 %, de préférence moins de 80 %, en particulier moins de 60 %, de façon particulièrement préférentielle moins de 50 % de la dimension verticale des micromiroir présentant un même angle d'inclinaison dans la zone intérieure.

8. Élément de sécurité selon l'une au moins des revendications 1 à 7, **caractérisé en ce que** les éléments de gaufrage dans la zone intérieure présentent une dimension verticale maximale inférieure à 20 µm, de préférence inférieure à 10 µm, de façon particulièrement préférentielle inférieure à 5 µm.

9. Élément de sécurité selon l'une au moins des revendications 1 à 8, **caractérisé en ce que** la zone de bord présente une largeur entre 0,1 mm et 1 mm.

10. Élément de sécurité selon l'une au moins des revendications 1 à 9, **caractérisé en ce que** la zone de surface partiellement pourvue d'un revêtement réfléchissant est pourvue d'une métallisation, constituée en particulier d'aluminium, d'argent, cuivre, d'or ou d'un alliage de métaux en tant que revêtement réfléchissant, ou **en ce que** la zone de surface partiellement pourvue d'un revêtement réfléchissant est pourvue d'une couche à haute réfraction, en particulier d'une couche de ZnS ou d'une couche de TiO₂, ou d'un revêtement à effet chatoyant, en particulier d'un revêtement multicouche avec un réflecteur, une couche d'espacement et un absorbeur.

11. Procédé de fabrication d'un élément de sécurité (12) selon l'une des revendications 1 à 10, dans lequel un support (20) est doté d'une zone de surface (22) partiellement pourvue d'un revêtement réfléchissant (42), dans lequel
- le support (20) est pourvu d'une couche de vernis de gaufrage dans la zone de surface (22) souhaitée,
- une pluralité d'éléments de gaufrage (30, 32), dont la taille est déterminée par une dimension latérale dans le plan x-y et par une dimension verticale dans la direction z, sont formés dans la couche de vernis de gaufrage dans la zone en relief (24), et dans lequel il reste une zone extérieure (26) de la zone de surface située à l'extérieur de la zone en relief,
- au cours d'une impression en couleur à lavage, la zone extérieure (26) est entièrement imprimée avec une couleur à lavage et les éléments de gaufrage le sont partiellement, dans lequel la zone destinée à être pourvue d'un revêtement réfléchissant dans l'élément de sécurité fini est exempte d'impression en couleur à lavage,
- la zone de surface (22) partiellement pourvue de couleur à lavage est pourvue du revêtement réfléchissant (42), et
- la couleur à lavage avec le revêtement réfléchissant (42) se trouvant dessus est retirée,
dans lequel
- la zone en relief est conçue avec une zone intérieure (34) et une zone de bord (36), la zone intérieure représentant la partie de la zone de surface destinée à être pourvue du revêtement réfléchissant dans l'élément de sécurité fini et la zone de bord entourant la zone intérieure sert à compenser d'inévitables écarts d'alignement pendant l'impression de la couleur à lavage, de sorte que pendant l'impression de la couleur à lavage, la zone intérieure reste entièrement dépourvue de couleur à lavage et la zone de bord le reste partiellement, et
- les éléments de gaufrage (30, 32) dans la zone intérieure (34) et la zone de bord (36) sont conçus avec des dimensions latérales différentes, notamment dans la zone de bord avec une dimension latérale moyenne mesurant moins de 90 % de la dimension latérale moyenne des éléments de gaufrage dans la zone intérieure, et/ ou les éléments de gaufrage dans la zone intérieure (34) et la zone de bord (36) sont conçus avec des dimensions verticales différentes, notamment dans la zone de bord avec une dimension verticale moyenne mesurant moins de 90 % de la dimension verticale moyenne des éléments de gaufrage dans la zone intérieure.

12. Procédé selon la revendication 11, **caractérisé en ce que** la zone en relief est conçue avec une zone de bord d'une largeur correspondant essentiellement à la taille des écarts d'alignement pendant l'impression en couleur à lavage.

13. Outil de gaufrage pour la fabrication d'un élément de sécurité (12) selon l'une des revendications 1 à 10, avec une zone en relief d'outil constituée d'une multitude d'éléments de gaufrage, dont la taille est déterminée par une dimension latérale dans le plan x-y et par une dimension verticale dans la direction z, dans lequel la zone en relief d'outil présente une zone intérieure et une zone de bord entourant la zone intérieure, et la dimension latérale moyenne des éléments de gaufrage dans la zone de bord mesure moins de 90 % de la dimension latérale moyenne des éléments de gaufrage dans la zone intérieure et/ ou la dimension verticale moyenne des éléments de gaufrage dans la zone de bord mesure moins de 90 % de la dimension verticale moyenne des éléments de gaufrage dans la zone intérieure.

14. Outil de gaufrage selon la revendication 13, **caractérisé en ce que** la dimension latérale moyenne des éléments de gaufrage dans la zone de bord mesure moins de 80 %, avantageusement moins de 60 %, de façon particulièrement avantageuse moins de 50 % de la dimension latérale moyenne des éléments de gaufrage dans la zone intérieure, et/ ou **en ce que** la dimension verticale moyenne des éléments de gaufrage dans la zone de bord mesure moins de 80 %, avantageusement moins de 60 %, de façon particulièrement avantageuse moins de 50 % de la dimension verticale moyenne des éléments de gaufrage dans la zone intérieure.

15. Outil de gaufrage selon la revendication 13 ou 14, **caractérisé en ce que** les éléments de gaufrage dans la zone intérieure sont agencés dans une grille régulière et présentent respectivement tous la même dimension latérale et les éléments de gaufrage dans la zone de bord sont agencés soit dans une grille régulière et présentent respectivement tous la même dimension latérale, ou sont agencés de façon apériodique et présentent des dimensions latérales différentes.

16. Outil de gaufrage selon l'une au moins des revendications 13 à 15, **caractérisé en ce que** les éléments de gaufrage sont formés par des micromiroirs inclinés par rapport au plan x-y, dans lequel les éléments de gaufrage dans la zone intérieure présentent de préférence une dimension verticale maximale inférieure à 20 µm, de préférence inférieure à 10 µm, de façon particulièrement préférentielle inférieure à 5 µm.
